Europäisches Patentamt

European Patent Office

Office européen des brevets

(19)

(11) Publication number: **0 154 546**
**A2**

(12) **EUROPEAN PATENT APPLICATION**

(21) Application number: **85301498.3**

(22) Date of filing: **05.03.85**

(51) Int. Cl.⁴: **B 60 B 33/00**

(30) Priority: **07.03.84 US 587042**

(43) Date of publication of application:
**11.09.85 Bulletin 85/37**

(84) Designated Contracting States:
**AT BE CH DE FR GB IT LI LU NL SE**

(71) Applicant: **STEWART-WARNER CORPORATION**
**1826 West Diversey**
**Chicago Illinois 60614(US)**

(72) Inventor: **Provolo, Daniel J.**
**2 Silver Circle**
**Fairfield Connecticut 06432(US)**

(74) Representative: **Roos, Michael John et al,**
**KILBURN & STRODE 30 John Street**
**London WC1N 2DD(GB)**

(54) **A wheeled castor.**

(57) A wheeled castor (10) comprises a mounting, and an axle (14) on which is mounted two wheels (15,16). The wheels are locked on the axle by means of resilient bushings (19,20), secured to the wheels, which clip into recessed grooves in each end of the axle.

FIG.2

EP 0 154 546 A2

## A Wheeled Castor

The invention relates to a wheeled castor, and particularly though not exclusively to a dual-wheeled castor.

Lightweight dual wheeled castors have found considerable commercial acceptance over the last decade for supporting office furniture and equipment as well as some residential furniture. As a result of this acceptance, the manufacture of lightweight dual wheel castors has been extremely competitive and engineering efforts to reduce the cost of the castors while maintaining adequate strength, reliability and durability have been keen.

Generally the castors include a central arcuate horn member that carries a vertically arranged pintle that fits within a socket plate fixed to the underside of the furniture or equipment to be supported in a manner so that the castor has swiveling motion. This horn carries a one or two-piece axle and usually the axle is non-rotatably fixed to the horn. Each of the wheels frequently has an integral hub with a central bore that is received on the projecting ends of the axle.

There have in the past been a plurality of methods for preventing removal of the wheels after the axle has been inserted into the wheel hubs. One method has been to form an annular rib inside the wheel bore that fits within an annular recess in the axle. This arrangement has not been found adequate because it is not possible to form the rib with enough radial thickness to do an adequate job of wheel locking. This is because the wheels are plastic and the central bore is formed with a core piece and the rib is formed by an annular recess in the core, and if a single core piece is used, which it must if the wheel bore is a closed end bore, the core itself will break the rib upon axial core removal unless the rib is radially shallow. Thus this method has not been found acceptable because the wheels can be easily removed after assembly, which is undesirable for this kind of castor because it decreases castor durability and reliability.

Another method of attaching wheels to this type of dual wheel castor is shown in U.S. Design Patent No. 220,938 and this uses a U-shaped metal spring clip carried by the underside of the horn that has legs that fit over radial flanges on the inner surface of the wheels around the wheel hubs. The flanges on the hub significantly increase the cost of the wheel because they cannot be moulded integrally with the wheel, and the spring clip frequently becomes dislodged from the lower side of the horn permitting the wheels to freely slide off the axle.

Another method of attaching dual wheel castor wheels is to form an axle-receiving bore entirely through the wheel and attach a snap ring over an end of the axle projecting outwardly from each wheel. In this method the axle and snap ring are visible from the outside of the wheel and therefore require a hub cap or other decorative element to conceal the axle ends, which significantly increases the cost of the castor in this competitive market.

It is an object of the present invention to ameliorate the problems noted above in attaching wheels to relatively light-duty dual wheel castors.

According to one aspect of the present invention a wheeled castor includes a rotary wheel and a stationary wheel support, the wheel being supported on the wheel support by a shaft and bore connection which includes locking means to restrain or prevent separation of the wheel and wheel support after their assembly, characterised in that the shaft and bore connection includes a shaft portion (14) on one of the wheel and the wheel support, part of the locking means being formed by a locking recess (24,25) in the shaft position, the bore (53,55) receiving a bushing (19,20) which has at least one resilient locking portion (46,47,48) forming another part of the locking means, and which extends radially inwardly of the bore, assembly being achieved by relative axial movement of the wheel and wheel support to engage the shaft portion in the bore such that the resilient locking portion or portions (46,47,48) is/are received in the locking recess (24,25) axially to lock the wheel and wheel support. Preferably the resilient portion is such that it is moved outward by the axle and then springs back into the locking recess.

This not only positively locks the wheels axially on the ends of the axle, but also provides a bearing support for the wheel on the axle. If desired, the bushing can be constructed at a nominal cost of a somewhat higher lubricity plastics material than the wheels to provide reduced frictional drag against rotational motion of the wheels on the axle.

Toward these ends the present castor may, specifically, include an arcuate central horn having a vertical pintle

-4-

boss constructed of a one-piece plastic moulding with a metal transverse axle insert-moulded therein. The axle may also have a central splined portion around which the horn is moulded to prevent rotation of the axle with respect to the horn and its ends may project laterally from the horn, to allow a wheel to be mounted on each end.

Each projecting end of the axle may have an outer cylindrical surface forming a bearing for rotatably supporting the wheel in a first reduced cylindrical bearing surface in the stepped wheel bore. Adjacent this cylindrical bearing surface on the axle is an abutment recess preferably including a flat annular radial surface contiguous with a frusto-conical surface that diverges in the direction of the horn. Between this recess and the horn is a second bearing surface on the axle equal in diameter to the first bearing surface and upon which the bushing is rotatably supported.

The bushing is preferably generally annular in configuration with a flange that abuts a wheel hub to limit inward movement of the bushing into the stepped wheel bore, and to provide a bearing surface for axial loads and it has a plurality of generally (preferably integral) axially and inwardly extending spring fingers that curve radially inwardly to a diameter equal to the inner diameter of the recess in the axle. The bushing flange preferably has an annular forwardly projecting rim, triangular in cross-section, that defines an energy director for the sonic welding of the bushing to the wheel hub.

0154546

-5-

A further preferable feature is that the bushing
extends only part way through the wheel bore and the
wheel is partly supported for rotation on a bearing
surface on the bushing and partly on a bearing surface
on the wheel, the two bearing surfaces being axially
supported.

The locking recess may comprise a groove formed
in the axle having one side sloping and the other radially-
extending, the two bearing surfaces, being of substantially
equal internal diameter, acting upon regions of the
shaft portion (14) being separated by the groove, and
the resilient locking portions (46,47,48) having an
unstressed inner diameter substantially equal to that
of the groove at its deepest point.

According to a second aspect of the invention
a method of manufacture of a wheeled castor comprises
a dual wheeled castor (10) characterised by a mounting
member (11) from which projects a pair of axle portions
(14) each having a locking recess (24,25) adjacent its
end, each end of the axle rotatably carrying a bushing
(19,20) having at least one resilient locking portion
(46,47,48) which is received into the locking recess
to lock the bushing axially to the axle and a wheel
(15,16) having an axially-extending bore (53,55), the
bushing being secured in the bore.

In assembly the wheels travel preferably down
a line with the inside hub of the wheel facing upwardly
and the bushings are dropped into the stepped wheel
bores with the energy director rims engaging the wheel
hubs. The bushing flanges are preferably then sonic- welded to the hub with a suitable ultrasonic welding tool rendering the bushing and the hub essentially a one-piece unit.

These assembled wheels are then pushed over the ends of the axle and, in one embodiment, during this movement the outer bearing surfaces on the axle spread the bushing fingers apart into an enlarged bore portion in the wheels, and as the outer axle bearing surface passes the ends of the fingers, the fingers snap radially inwardly into the axle recess permanently axially locking the wheels to the axle.

The invention may be carried into practice in various ways, but one specific embodiment will now be described by way of example, with reference to the accompanying drawings, in which:-

Figure 1 is a persepctive view of a dual wheel castor according to the present invention;

Figure 2 is an enlarged longitudinal cross-section, taken generally along the line 2-2 of Fig. 1 and illustrating the castor axle and two bushings positioned in an assembled castor;

Figure 3 is an enlarged end elevation of one of the bushings illustrated in Fig. 2;

Figure 4 is a longitudinal cross-section of one bushing taken generally along the line 4-4 of Fig. 3;

Figure 5 is a perspective view of one bushing and one wheel, prior to assembly;

Figure 6 is a perspective view of an assembled wheel and bushing, with an ultrasonic welding tool approaching the bushing;

Figure 7 is an exploded view of a pair of wheel assemblies just prior to being pushed over ends of the axle;

Figure 8 is an enlarged fragmentary longitudinal cross-section of one wheel assembly at an initial stage of being pushed over one end of the axle;

Figure 9 is a fragmentary cross-section, similar to Fig. 8, with the end of the axle spreading the bushing fingers; and

Figure 10 is a fragmentary cross-section similar to Figs. 8 and 9 with the wheel assembly in its fully seated position on the axle, and locked by the bushing.

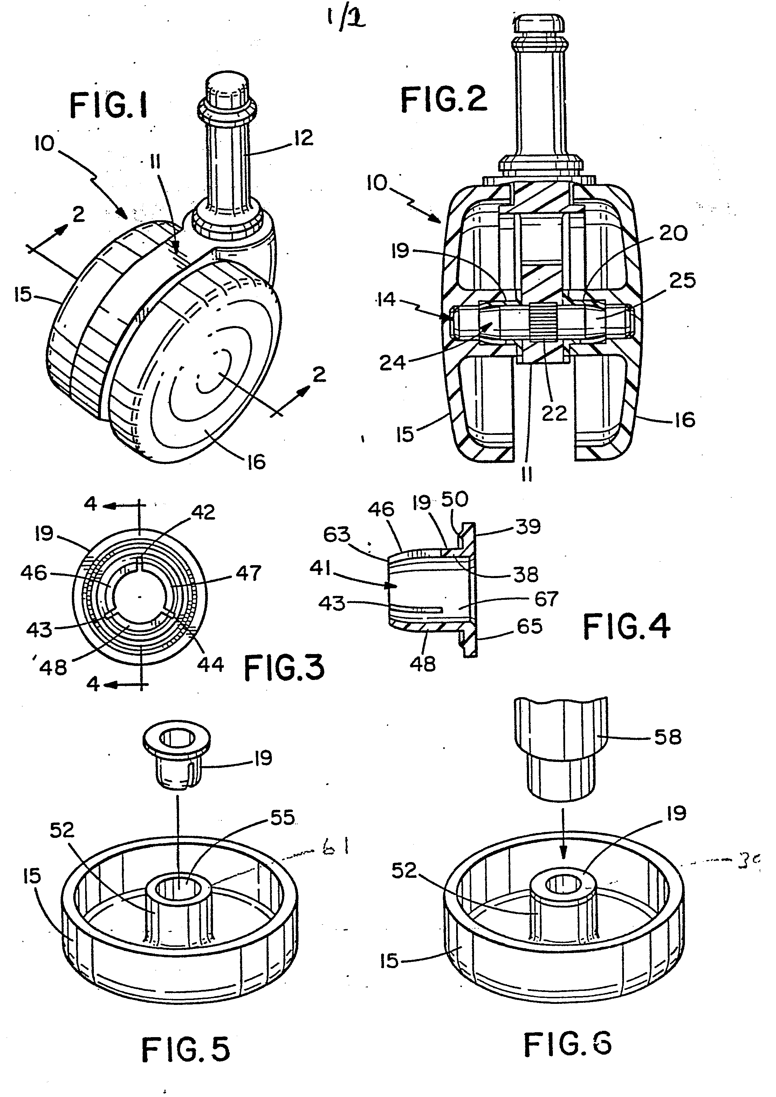

Figures 1 and 2 illustrate an assembled dual-wheel castor 10 according to the present invention. It includes an arcuate central horn 11 carrying a vertical swivel pintle 12, and a horizontally extending axle 14 upon opposite ends of which wheels 15 and 16 are rotatably mounted. The wheels 15 and 16 are axially locked on the axle 14 by a pair of identical bushings 19 and 20, the form of which is shown, for example, in Figures 3, 4 and 5.

The horn 11, wheels 15 and 16 and bushings 19 and 20 are all constructed of a suitable high-impact plastics, such as Nylon or Delryn (Registered Trade Marks). The bushings 19 and 20, because they are moulded separately from the wheels 15 and 16, and also since they act as bearings for the wheels, may alternatively be moulded of a different plastics than that of the wheels, preferably a higher lubricity plastics at a nominal cost increment.

-8-

The axle 14 is insert-moulded in the horn 11 and includes an enlarged, central axially-knurled portion 22 that prevents both rotational and axial movement of the axle with respect to horn 11.

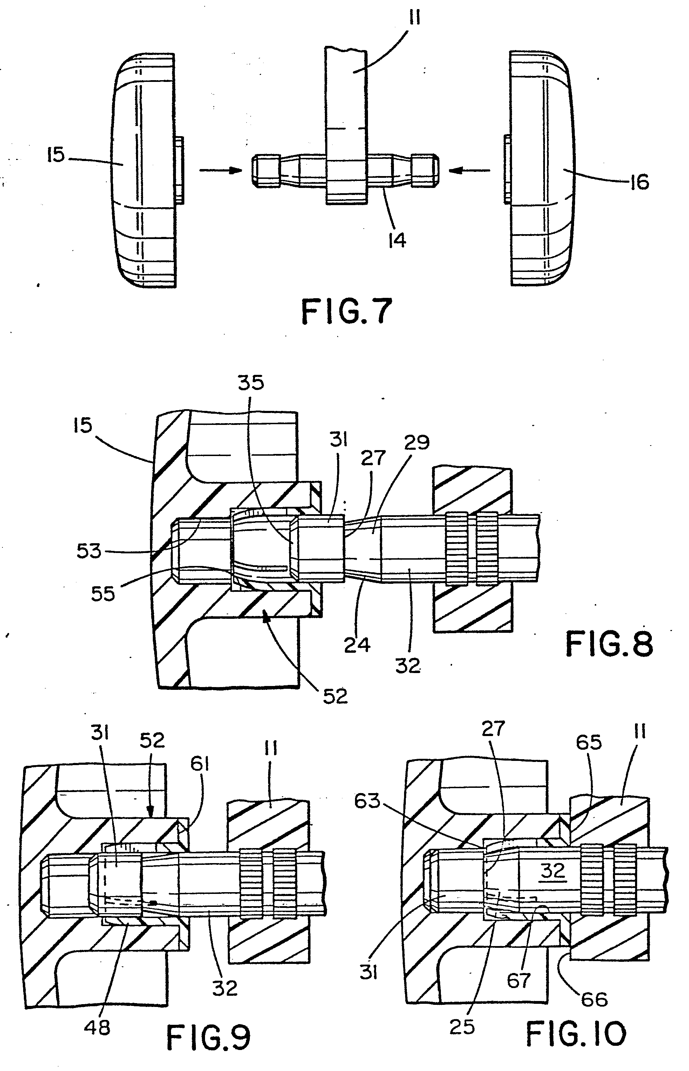

The ends of the axle 14 projecting from the horn 11 are of uniform diameter, except for recesses 24 and 25 one on each axle end and which are identical to each other. As seen more clearly in Figure 8 the recesses each include an annular radial shoulder 27 and an inwardly converging frusto-conical surface 29.

The recesses 24 and 25 separate the axle ends into a first cylindrical outer, bearing surface 31, and a second cylindrical, inner, bearing surface 32, both of the same diameter. The distal ends of the axle each have a short chamfer as indicated at 35.

The bushings 19 and 20 are identical and, as seen in Figs. 3 and 4, are generally annular in configuration with an intermediate annular portion 38, from one end of which an annular radially extending flange 39 extends. The other end forms a spheroidal portion 41, with axially extending slots 42, 43 and 44 therein, that define three identical resilient spring fingers 46, 47 and 48.

The relaxed inner diameter between the free ends of the spring fingers 46, 47 and 48, i.e. adjacent the left end thereof as seen in the plane of Fig. 4, is equal to the diameter of the axle 14 at the bottom of the recesses 24 and 25 at the radial shoulder 27.

The radial flange 39 of the bushing has an axially extending annular rib 50 that is triangular in cross-section. This assists in directing ultrasonic waves from a sonic welding tool through the flange 39 into
the wheels to provide improved welding of the bushings
in the wheels (to be described). As seen more clearly
in Fig. 8, each wheel has an inwardly directed central
cylindrical hub 52 with a stepped closed-end central
bore therein which is defined by an inner bearing bore
53 and an outer enlarged locking bore 55. The inner
bearing bore 53, after assembly is rotatably supported
on the outer axle bearing surface 31 and is slightly
larger in diameter to provide clearance for supporting
the wheel for free rotational movement on the axle 14.
The enlarged locking bore 55 has an axial length which
is slightly greater than the combined axial lengths
of the intermediate portion 38 and the spheroidal finger-
forming portion 38 of the bushing and has a diameter
equal to the outer diameter of the intermediate bushing
portion 38.

As seen in Figs. 5 and 6, during assembly, the
wheels, pass down an assembly line with their inner
surfaces facing upwardly, and the bushings 19 are dropped
vertically downwardly into the locking bores 55 of the
wheels. Thereafter, as shown in Figure 8, a suitable
ultrasonic tool 58 is brought down into engagement with
the bushing flange 38 to weld sonically the flange 39
to an end surface 61 of the hub 52. The rib 50 on the
flange 39 assists in directing the sonic waves through
the flange into the surface 61 of the wheel hub 52.

Then, as depicted in Figs. 7 to 10, the wheel
and bushing assemblies are pushed over the opposite
ends of the axle. As the outer axle bearing surface
31 passes through the bushing, it spreads the fingers 46, 47 and 48 radially outwardly, permitting the axle to pass through the bushing, but, as the axle surface 31 passes the ends of the fingers 46, 47 and 48, they snap radially inwardly into the respective recesses 24 and 25 to their relaxed position. As shown in Figures 4 and 10, the fingers 46, 47 and 48 have substantially radial end surfaces 63 that engage the radial shoulder 27 in the axle recess positively to prevent removal of the wheels from the axle.

As seen in Figs. 2 and 10 the radial shoulders 27 are positioned such that the rear surfaces 65 of the bushings engage sidewalls 66 of the horn 11, and thus form a thrust bearing for the wheels 15, 16.

The intermediate annular portion 38 of the bushing has an inner annular surface 67 of a diameter slightly larger than the inner axle bearing surface 32, and it engages the inner bearing surface 32 to provide additional rotational support for the wheels on the axle 14.

Thus, the bushings 19, 20 serve not only to permanently axially lock the wheels to the axle 14, but also provide a second radial or journal bearing for the wheels on the axle and an axial thrust bearing between the wheels and the horn 11.

It will be evident that, although the castor specifically described includes two journal surfaces for each wheel (the cylindrical surfaces 31 and 32), only one of these need be a bearing surface.

Also, although the embodiment described is a double-wheel castor, the invention extends to castors having a single wheel.

Claims:

1. A wheeled castor comprising a rotary wheel and a stationary wheel support, the wheel being supported on the wheel support by a shaft and bore connection which includes locking means to restrain or prevent separation of the wheel and wheel support after their assembly, characterised in that the shaft and bore connection includes a shaft portion (14) on one side of the wheel and the wheel support, part of the locking means being formed by a locking recess (24,25) in the shaft portion, the bore (53,55) receiving a bushing (19,20) which has at least one resilient locking portion (46,47,48) forming another part of the locking means, and which extends radially inwardly of the bore, assembly being achieved by relative axial movement of the wheel and wheel support to engage the shaft portion in the bore such that the resilient locking portion or portions (46,47,48) is/are received in the locking recess (24,24) axially to lock the wheel and wheel support.

2. A wheeled castor (10) as claimed in claim 1 characterised in that the wheel is mounted by inserting it on the end of the shaft portion (14) and passing it along it so that the resilient locking portion (46,47,48) is moved radially outward by the shaft portion and then springs back into the locking recess (24,25).

3. A wheeled castor as claimed in claim 1 or claim 2 characterised in that the resilient locking portion includes a plurality of generally axially and inwardly extending spring fingers, and the locking recess in the shaft portion includes radial surface against which

-12-

the ends of the spring fingers engage to prevent outward movement of the wheel after mounting.

4.    A wheeled castor as claimed in any one of the preceding claims in which the bushing (19,20) extends only part way through the bore, and the wheel (15,16) is partly supported for rotation on a bearing surface on the bushing and partly on a bearing surface on the wheel, the two bearing surfaces being axially separated.

5.    A wheeled castor as claimed in claim 4 in which the locking recess (24,25) comprises a groove formed in the shaft portion (14) having one side sloping and the other (27) radially-extending, the two bearing surfaces, being substantially of equal internal diameter, acting upon regions of the shaft (14) being separated by the groove, and the resilient locking portion (46,47,48) having an unstressed inner diameter substantially equal to that of the groove at its deepest point.

6.    A wheeled castor claimed in any one of the preceding claims in which the bushing (19,20) has a radially outwardly directed flange (65) engaging a cooperating radial surface on the wheel to axially position the bushing in the wheel, the flange being bonded to the wheel.

7.    A wheeled castor as claimed in claim 6 in which the surface of the flange (65) facing away from the wheel (15,16) abuts the mounting member (11) and provides a bearing surface for axial loads.

-13-

8.    A wheeled castor as claimed in any preceding claim: in which the axle (14) projects from the mounting member (11) at both ends and has a wheel (15,16) similarly mounted on each.

9.    A dual wheeled castor (10) characterised by a mounting member (11) from which projects a pair of axial portions (14) each having a locking recess (24,25) adjacent its end, each end of the axle rotatably carrying a bushing (19,20) having at least one resilient locking portion (46,47,48) which is received into the locking recess, to lock the bushing axially to the axle and a wheel (15,16) having an axially-extending bore (53,55) the bushing being received in the bore.

FIG.1

FIG.2

FIG.3

FIG.4

FIG.5

FIG.6

FIG.7

FIG.8

FIG.9

FIG.10